# EUROPÄISCHE PATENTANMELDUNG

(11) **EP 1 933 076 A2**
(43) Veröffentlichungstag der Anmeldung: **18.06.2008**
(21) Anmeldenummer: 07121972.9
(22) Anmeldetag: 30.11.2007
(51) Int. Cl.: F16M 7/00

(54) **Maschinenfuß mit Aufsetzkraft-Messeinrichtung**

(30) Priorität: 12.12.2006 DE 102006058568
(71) Anmelder: SIEMENS AKTIENGESELLSCHAFT, 80333 München (DE)
(72) Erfinder: Conrad, Robert, Dr., 82054 Sauerlach (DE); Schnedlitz, Wolfgang, 81379 München (DE)

(57) **Zusammenfassung**

Die Anmeldung beschreibt einen Maschinenfuß (310) für eine Bearbeitungsvorrichtung (400). Der Maschinenfuß (310) weist auf ein erstes Fußteil (320), eingerichtet zum Abstützen an einem Untergrund, ein zweites Fußteil (330), welches mit einem Chassis (303) der Bearbeitungsvorrichtung (400) koppelbar ist, und eine Messeinrichtung (350, 325), welche zwischen dem ersten Fußteil (320) und dem zweiten Fußteil (330) angeordnet ist und welche zum Messen und Anzeigen der zwischen dem ersten Fußteil (320) und dem zweiten Fußteil (330) wirkenden Aufsetzkraft eingerichtet ist. Die Anmeldung beschreibt ferner eine Bearbeitungsvorrichtung, insbesondere einen Bestückautomaten (400), welcher mit zumindest einem derartigen Maschinenfuß (410) ausgestattet ist. Außerdem beschreibt die Anmeldung ein Verfahren zum Aufstellen einer Bearbeitungsvorrichtung (400), welche drei herkömmliche höhenverstellbare und starre Maschinenfüße (411a, 411b, 411c) und einen die Aufsetzkraft messenden Maschinenfuß (310, 410) aufweist.

## Beschreibung

Die vorliegende Erfindung betrifft einen Maschinenfuß für eine Bearbeitungsvorrichtung, insbesondere für einen Bestückautomaten zum automatischen Bestücken von Bauelementeträgern mit Bauelementen. Die vorliegende Erfindung betrifft ferner eine Bearbeitungsvorrichtung mit zumindest einem derartigen Maschinenfuß. Ferner betrifft die vorliegende Erfindung ein Verfahren zum Aufstellen einer Bearbeitungsvorrichtung, insbesondere zum Aufstellen eines Bestückautomaten zum automatischen Bestücken von Bauelementeträgern mit Bauelementen.

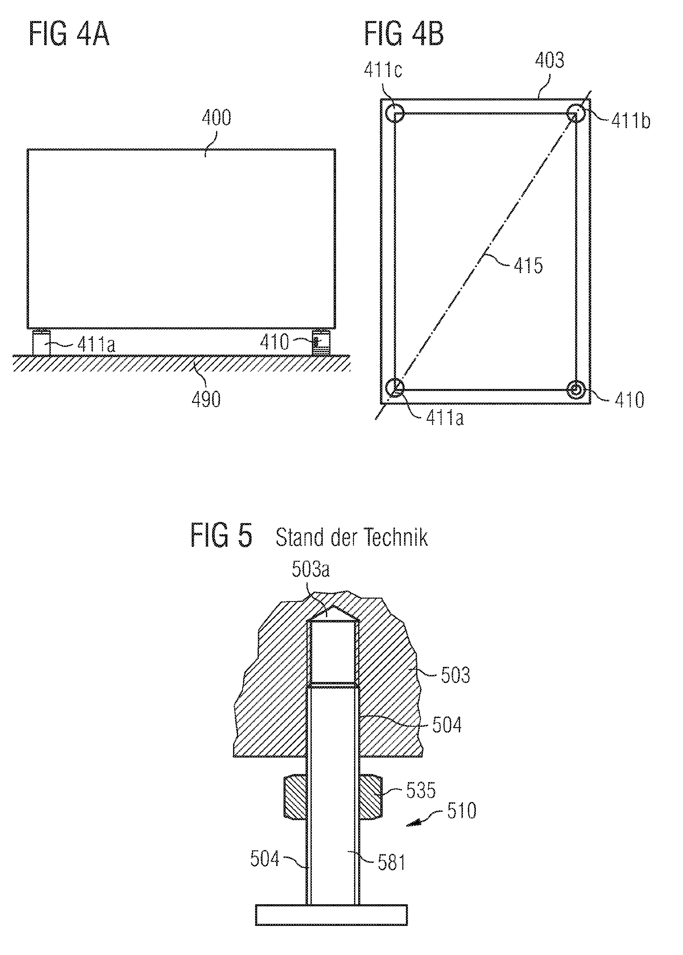

Aus dem Stand der Technik ist ein Maschinenfuß 510 für eine Bearbeitungsvorrichtung bekannt, wie er beispielhaft in Figur 5 dargestellt ist. Ein als Gewindestange ausgebildeter Grundkörper 581 des Maschinenfußes 510 kann in eine Gewindebohrung 503a eines Maschinenchassis 503 eingeschraubt werden. Die Gewindebohrung 503a weist zu diesem Zweck ein Innengewinde 504 auf. Auf der Gewindestange 581 ist ferner eine Kontermutter 535 aufgeschraubt, mittels welcher eine durch eine entsprechende Drehung der Gewindestange 581 eingestellte Standhöhe des Chassis 503 fixiert werden kann.

Insbesondere im Bereich der Bestücktechnik treten während eines Bestückvorganges jedoch sehr hohe dynamische Kräfte auf, welche so weit wie möglich an den Boden weitergeleitet werden müssen. An die Steifigkeit und Standfestigkeit des Chassis sind deshalb sehr hohe Anforderungen gestellt.

Aus der DE 199 49 847 C1 ist eine Einrichtung zum Abstützen eines Chassis eines Bestückautomaten auf einem Fundament bekannt. Die Einrichtung zum Abstützen umfasst ein fußartiges Stützteil mit einem senkrecht stehenden Schaft, der in einem Stützlager des Chassis höhenverstellbar fixiert ist. Das Stützlager ist mit zumindest einer waagerecht spannenden Klemmeinrichtung versehen, die den Schaft spielfrei mit dem Stützlager verklemmt. Der Schaft ist glattzylindrisch ausgebildet und in einer schellenartig geschlitzten Bohrung des Chassis aufgenommen. Durch die schellenartig wirkende Klemmeinrichtung kann der Schaft auf eine größere Länge spielfrei eingespannt werden, so dass die Steifigkeit erhöht und Schwingungsamplituden des Bestückautomaten verringert werden.

Aus der EP 932 331 A1 ist ein Bestückautomat zum automatischen Bestücken von Bauelementeträgern mit elektronischen Bauelementen bekannt. Der Bestückautomat weist einen Maschinenfuß auf, der eine mit Dämpfungselemente versehene federnde Abstützung umfasst. Bei einem hochdynamischen Betrieb des Bestückautomaten, welcher zu entsprechenden Vibrationen führt, werden Federelemente des Maschinenfußes verformt, so dass sich ein Chassis des Bestückautomaten relativ zu einer festen Standfläche bewegen kann. Auf diese Weise wird eine Vibrationsübertragung von dem Bestückautomaten auf die Stellfläche vermieden. Die Dämpfungselemente bewirken eine Dämpfung der Vibrationen des Bestückautomaten, so dass ein resonanzartiges Aufschaukeln der Schwingungen des Bestückautomaten vermieden wird.

Beim Aufstellen eines Bestückautomaten mit mehr als drei Maschinenfüßen ergibt sich jedoch das Problem, die Masse des Bestückautomaten möglichst gleichmäßig auf sämtliche Maschinenfüße zu verteilen. Um ein möglichst spannungsfreies Aufstellen des Bestückautomaten zu erreichen, sollte jeder Maschinenfuß eine Aufsetzkraft aufnehmen, die sich aus der Masse und der Massenverteilung des Bestückautomaten ergibt. Um dies zu erreichen, werden die Maschinenfüße üblicherweise von einem Monteur nach subjektiven Kriterien mittels eines Schraubenschlüssels gespannt und mit einer Kontermutter fixiert. Dabei hängt eine gleichmäßige Lastverteilung jedoch unmittelbar von der Geschicklichkeit und der Erfahrung des Monteurs ab.

Der Erfindung liegt die Aufgabe zugrunde, einen Maschinenfuß, eine Bearbeitungsvorrichtung und ein Verfahren zum Aufstellen einer Bearbeitungsvorrichtung anzugeben, welche ein möglichst spannungsfreies und zugleich einfaches Aufstellen einer Bearbeitungsvorrichtung ermöglichen.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Mit dem unabhängigen Patentanspruch 1 wird ein Maschinenfuß für eine Bearbeitungsvorrichtung beschrieben. Der Maschinenfuß eignet sich insbesondere für einen Bestückautomaten zum automatischen Bestücken von Bauelementeträgern mit Bauelementen. Der beschriebene Maschinenfuß weist auf (a) ein erstes Fußteil, eingerichtet zum Abstützen an einem Untergrund, (b) ein zweites Fußteil, welches mit einem Chassis der Bearbeitungsvorrichtung koppelbar ist, und (c) eine Messeinrichtung, welche zwischen dem ersten Fußteil und dem zweiten Fußteil angeordnet ist und welche zum Messen und Anzeigen der zwischen dem ersten Fußteil und dem zweiten Fußteil wirkenden Aufsetzkraft eingerichtet ist.

Dem beschriebenen Maschinenfuß liegt die Erkenntnis zugrunde, dass beim Aufstellen einer Bearbeitungsvorrichtung bzw. Bearbeitungsmaschine die auf den Maschinenfuß wirkende Aufsetzkraft auf einfache Weise bestimmt und gleichzeitig abgelesen werden kann. Durch eine entsprechende Höhenjustage bzw. Höhenkorrektur der einzelnen Maschinenfüße kann somit auf einfache Weise eine ungleiche Belastung der Bearbeitungsvorrichtung vermieden werden. Einer ungewollten Verspannung der Bearbeitungsvorrichtung selbst kann somit frühzeitig auf effektive Weise entgegengewirkt werden.

Sofern das Gewicht der ganzen Bearbeitungsvorrichtung und, insbesondere bei einer ungleichen Masseverteilung, der Schwerpunkt der Bearbeitungsvorrichtung bekannt sind, müssen nicht alle verwendeten Maschinenfüße jeweils eine der oben beschriebenen Messeinrichtung aufweisen. So ist es bei Verwendung von insgesamt vier Maschinenfüßen ausreichend, wenn zumindest ein Maschinenfuß die genannte Kraftmess- und Anzeigeeinrichtung aufweist. Die übrigen Maschinenfüße können herkömmliche höhenverstellbare Maschinenfüße sein. Dies setzt jedoch voraus, dass die Bearbeitungsvorrichtung in einer horizontalen Orientierung aufgestellt wird. Diese Anforderung stellt jedoch in der Praxis keine bedeutende Einschränkung dar, da Bearbeitungsmaschinen üblicherweise mit einer horizontalen Orientierung aufgestellt werden.

Selbstverständlich können auch sämtliche zur Aufstellung einer Bearbeitungsvorrichtung verwendeten Maschinenfüße mit der beschriebenen Messeinrichtung ausgestattet sein. Bei einer zumindest annähernd gleichmäßigen Masseverteilung und bei einer geeigneten räumlichen Anordnung der Maschinenfüße ergibt sich in diesem Fall die Aufsetzkraft durch eine einfache Differenzbetrachtung der von den Maschinenfüßen gemessenen Aufsetzkräfte und der gesamten Gewichtskraft der Bearbeitungsvorrichtung.

Der Untergrund ist beispielsweise der Fußboden einer Maschinenhalle, in der die Bearbeitungsvorrichtung aufgestellt ist. Insbesondere bei schweren Bearbeitungsvorrichtungen ist der Untergrund ein solides und stabiles Fundament.

Gemäß einem Ausführungsbeispiel der Erfindung nach Anspruch 2 weist der Maschinenfuß zusätzlich eine Aufsetzkraft-Einstelleinrichtung auf. Die Aufsetzkraft-Einstelleinrichtung ist zum Höhenverstellen des zweiten Fußteils in Bezug zu dem Chassis und/oder zum Höhenverstellen des ersten Fußteils in Bezug zu dem Untergrund eingerichtet. Dies hat den Vorteil, dass durch eine einfache Höhenverstellung die auf den Maschinenfuß wirkende Aufsetzkraft eingestellt werden kann.

Durch eine entsprechende Höhenverstellung kann sich auch die Höhenlage zwischen dem ersten Fußteil und dem zweiten Fußteil ändern. Diese geänderte Höhenlage wird dann durch die Messeinrichtung erfasst.

Gemäß einem weiteren Ausführungsbeispiel der Erfindung nach Anspruch 3 weist die Aufsetzkraft-Einstelleinrichtung ein Aufnahmegewinde auf. Das Aufnahmegewinde ist an dem zweiten Fußteil ausgebildet und in das Chassis der Bearbeitungsvorrichtung einschraubbar. Dies hat den Vorteil, dass durch ein einfaches Verdrehen des Aufnahmegewindes bzw. des zweiten Fußteils sowohl die Aufsetzkraft eingestellt als auch eine Höhenjustage der Bearbeitungsvorrichtung vorgenommen werden kann. Dabei wird die Höhenlage des zweiten Fußteils in Bezug zu dem Chassis verstellt.

Ein einfaches Verdrehen des Aufnahmegewindes kann beispielsweise durch ein Anzugselement erreicht werden, welches mit einem geeigneten Anzugsinstrument in Eingriff gebracht werden kann. Dabei kann das Anzugselement in starrer Weise mit dem Aufnahmegewinde bzw. mit dem zweiten Fußteil verbunden sein. Das Anzugselement ist beispielsweise eine Sechskant-Außenkontur. Als Anzugsinstrument eignet sich beispielsweise ein gewöhnlicher Schraubenschlüssel bzw. ein gewöhnlicher Gabelschlüssel.

Das beschriebene Aufnahmegewinde hat den Vorteil, dass der Maschinenfuß kompatibel zu herkömmlichen Maschinenfüßen ausgebildet sein kann. Damit können auch bereits im Betrieb befindliche Bestückautomaten oder noch auszuliefernde Bestückautomaten ohne großen Aufwand derart umgerüstet bzw. modifiziert werden, dass zur sicheren Aufstellung des Bestückautomaten zumindest ein die Aufsetzkraft messender Maschinenfuß verwendet wird.

Gemäß Anspruch 4 weist der Maschinenfuß zusätzlich ein Fixierelement auf, welches zum Fixieren des Aufnahmegewindes relativ zu dem Chassis eingerichtet ist. Das Fixierelement ist beispielsweise eine Kontermutter, welche an dem Aufnahmegewinde gegen das Chassis geschraubt werden kann. Somit kann durch eine entsprechende Klemmwirkung zwischen Kontermutter und Aufnahmegewinde auf der einen Seite und Kontermutter und Chassis auf der anderen Seite eine versehentliche Verdrehung des Aufnahmegewinde und damit eine ungewollte Höhen-Dejustierung bzw. ungewollte Verstellung der Aufsetzkraft ausgeschlossen werden. Das Fixierelement dient demzufolge der Fixierung einer eingestellten Aufsetzkraft, die nach einer entsprechenden Justierung beispielsweise während des Betriebs der Bearbeitungsvorrichtung beibehalten werden soll.

Gemäß Anspruch 5 weist die Messeinrichtung ein Federelement auf. Dies hat den Vorteil, dass die jeweilige Aufsetzkraft bei Kenntnis der Federkennlinie anhand der Kompression des Federelements auf einfache Weise ermittelt werden kann. Die Federkennlinie wird beispielsweise durch das Hook'sche Gesetz beschrieben.

Das Federelement kann eine Feder, insbesondere eine Schraubenfeder sein, welches zwischen dem ersten Fußteil und dem zweiten Fußteil eingebracht ist. Die Feder kann abhängig von den zu erwartenden Aufsetzkräften eine geeignete Federkonstante aufweisen. Selbstverständlich kann das Federelement auch jedes andere eine gewisse Elastizität aufweisendes Bauelement wie beispielsweise ein entsprechend geformter Gummi sein.

Die Verwendung einer Feder hat den Vorteil, dass sich der Höhen-Einstellweg des messenden Maschinenfußes insbesondere bei einer weichen Federkonstanten im Vergleich zu einem starren Maschinenfuß erheblich erhöht.

Gemäß Anspruch 6 weist die Messeinrichtung zusätzlich eine Anzeigeskala auf, mittels welcher eine Kompression des Federelements ablesbar ist. Dies bedeutet, dass mittels der Anzeigeskala die relative Höhenverschiebung zwischen dem ersten Fußteil und dem zweiten Fußteil abgelesen werden kann. Die Anzeigeskala kann an dem ersten Fußteil oder alternativ an dem zweiten Fußteil angebracht sein.

Bei einer Kompression des Federelements verschieben sich die beiden Fußteile derart gegeneinander, dass, sofern die Anzeigeskala an dem ersten Fußteil angebracht ist, ein dem zweiten Fußteil zugeordnetes und mit dem zweiten Fußteil starr verbundenes Referenzelement als Zeiger für die Anzeigeskala wirkt. Sofern die Anzeigeskala an dem zweiten Fußteil angebracht ist, wirkt ein mit dem ersten Fußteil starr verbundenes Referenzelement als Zeiger für die Anzeigeskala. Das Referenzelement kann dabei eine geeignete Kante oder ein Vorsprung des zweiten Fußteils bzw. des ersten Fußteils sein.

An dieser Stelle wird darauf hingewiesen, dass anstelle einer Kraftanzeige über eine geeignete Skala auch eine sog. Kraftmessdose verwendet werden kann.

Gemäß Anspruch 7 weist der Maschinenfuß zusätzlich ein Klemmelement auf, welches zum Fixieren des ersten Fußteils relativ zu dem zweiten Fußteil eingerichtet ist. Durch das Klemmelement kann somit zwischen den beiden Fußteilen eine mechanisch starre Verbindung hergestellt werden. Diese Fixierung erfolgt bevorzugt nach einer vorangegangenen Justierung der Aufsetzkräfte, so dass die Bearbeitungsvorrichtung in einem spannungsfreien Zustand auf dem Untergrund aufgestellt ist.

Die relative Fixierung der beiden Fußteile zueinander in einer mechanisch starren Weise hat den Vorteil, dass während des Betriebs der Bearbeitungsvorrichtung ein ungewolltes Federn oder Schwingen des Maschinenfußes verhindert wird. Die Bearbeitungsvorrichtung bleibt sicher und fest auf dem Untergrund aufgestellt. Dies gilt auch für den Betrieb einer mechanisch hochdynamischen Bearbeitungsvorrichtung, bei welcher vergleichsweise große Massen ruckartig bewegt werden, so dass über den Maschinenfuß große Impulse auf die Stellfläche der Bearbeitungsvorrichtung übertragen werden.

Gemäß Anspruch 8 weist das zweite Fußteil eine Spannhülse auf, innerhalb der zumindest ein Teil des ersten Fußteils geführt ist. Alternativ weist das erste Fußteil eine Spannhülse auf, innerhalb der zumindest ein Teil des zweiten Fußteils geführt ist. Die Verwendung einer Spannhülse hat den Vorteil, dass die beiden Fußteile zueinander in der selben Achslage angeordnet sein können. Somit wirken auch bei einer hohen Aufsetzkraft in vorteilhafter Weise keinerlei Biegemomente auf den Maschinenfuß. Damit kann auch bei vertretbarem Materialaufwand eine hohe Stabilität des Maschinenfußes gewährleistet werden.

In einem geöffneten Zustand der Spannhülse sind die beiden Fußteile weitgehende frei gegeneinander verschiebbar. Die effektive Aufsetzkraft kann somit durch die zwischen den beiden Fußteilen angeordnete Messeinrichtung genau bestimmt werden. In einem geschlossenen Zustand der Spannhülse ist ein relatives Verschieben der beiden Fußteilen ausgeschlossen, so dass auf einfache und zugleich zuverlässige Weise die oben beschriebene starre Verbindung zwischen dem ersten Fußteil und dem zweiten Fußteil hergestellt werden kann. Das Schließen der Spannhülse kann in bekannter Weise beispielsweise mittels seitlich angeordneten Inbus-Schrauben erfolgen.

Mit dem unabhängigen Anspruch 9 wird eine Bearbeitungsvorrichtung und insbesondere ein Bestückautomat zum Bestücken von Bauelementeträgern mit Bauelementen beschrieben. Die Bearbeitungsvorrichtung weist auf (a) ein Chassis und (b) zumindest einen Maschinenfuß nach einer der oben beschriebenen Ausführungsformen.

Der genannten Bearbeitungsvorrichtung liegt die Erkenntnis zugrunde, dass durch die Verwendung der oben beschriebenen Maschinenfüße die Bearbeitungsvorrichtung derart aufgestellt werden kann, dass alle Maschinenfüße entsprechend der Gewichtsverteilung der Bearbeitungsvorrichtung belastet werden. Im Falle einer Bearbeitungsvorrichtung mit einer weitgehend gleichmäßigen Gewichtsverteilung sind dabei alle Maschinenfüße gleich stark belastet. Auf diese Weise kann sowohl ein spannungsfreies Aufstellen als auch ein spannungsfreier Betrieb der Bearbeitungsvorrichtung gewährleistet werden. Ein spannungsfreies Aufstellen eines Bestückautomaten hat den Vorteil, dass auch über einen längeren Zeitraum eine hohe Bestückgenauigkeit gewährleistet werden kann.

Mit dem unabhängigen Anspruch 10 wird ein Verfahren zum Aufstellen einer Bearbeitungsvorrichtung angegeben, welches sich insbesondere zum Aufstellen eines Bestückautomaten zum automatischen Bestücken von Bauelementeträgern mit Bauelementen eignet. Die aufzustellende Bearbeitungsvorrichtung weist dabei vier Maschinenfüße auf. Drei der vier Maschinenfüße sind starre Maschinenfüße, die in der Höhe verstellbar sind. Einer der vier Maschinenfüße ist ein messender Maschinenfuß gemäß einem der oben beschriebenen Ausführungsbeispiele. Das Verfahren weist folgende Schritte auf: (a) Höhenverstellen der drei starren Maschinenfüße derart, dass der messende Maschinenfuß zumindest teilweise entlastet ist und dass die Bearbeitungsvorrichtung horizontal ausgerichtet ist, und (b) Justieren des messenden Maschinenfußes, so dass von der Messeinrichtung des messenden Maschinenfußes eine vorbestimmte Aufsetzkraft gemessen und angezeigt wird.

Dem genannten Verfahren liegt die Erkenntnis zugrunde, dass bereits unter Verwendung von lediglich einem messenden Maschinenfuß auf einfache Weise eine geeignete Belastung aller Maschinenfüße realisiert werden kann. Eine geeignete Belastung der jeweiligen Maschinenfüße führt automatisch zu einer Reduzierung von Schwingungen, was wiederum bei einem Bestückautomaten zu einer Verbesserung der Bestückgenauigkeit führt.

Unter dem Begriff geeignete Belastung ist in diesem Zusammenhang zu verstehen, dass die jeweiligen Maschinenfüße mit einer Aufsetzkraft belastet sind, die sich aus einer gegebenenfalls ungleichmäßigen Masseverteilung der Bearbeitungsvorrichtung ergibt. Bei einer gleichmäßigen Masseverteilung der Bearbeitungsvorrichtung liegt eine geeignete Belastung genau dann vor, wenn jeder der Maschinenfüße genau ein Viertel der gesamten Gewichtskraft der Bearbeitungsvorrichtung trägt.

Ein nicht vollständiges sondern lediglich teilweises Entlasten des messenden Maschinenfußes hat den Vorteil, dass sich die Bearbeitungsvorrichtung beim Aufstellen stets in einer stabilen Lage befindet. Ein ungewolltes Verkippen der Bearbeitungsvorrichtung um eine Kippachse, bei der die Bearbeitungsvorrichtung auf den messenden Maschinenfuß fällt und der diagonal gegenüber liegende Maschinenfuß in der Luft hängt, kann somit verhindert werden.

Das genannte Verfahren kann auch bei bereits aufgestellten Bearbeitungsvorrichtungen durchgeführt werden. Somit kann direkt am Aufstellort der jeweiligen Bearbeitungsvorrichtung eine einfache Kontrolle der Kraftbelastung und gegebenenfalls eine Nachjustierung der einzelnen Maschinenfüße durchgeführt werden. Dabei werden zur Durchführung des Verfahrens keine zusätzlichen Maschinenressourcen wie beispielsweise Sensoren, Aktuatoren, elektronische bzw. elektrische Komponenten oder Rechnerkapazitäten benötigt. Das genannte Verfahren ist somit auf einfache Weise durchführbar, so dass unabhängig von der Geschicklichkeit einer Bedienperson bzw. eines Monteurs stets ein genau definierter und reproduzierbaren Aufstellzustand der Bearbeitungsvorrichtung gewährleistet werden kann.

Gemäß einem Ausführungsbeispiel der Erfindung weist das Verfahren zusätzlich den folgenden Schritt auf: Berechnen der vorbestimmten Aufsetzkraft basierend auf der Gewichtskraft und der Masseverteilung der Bearbeitungsvorrichtung. Dies hat den Vorteil, dass die an dem messenden Maschinenfuß einzustellende Aufsetzkraft bereits vorab bestimmt werden kann. Damit kann an dem Maschinenfuß eine feste Einstellmarkierung verwendet werden, welche die vorab bestimmte Aufsetzkraft anzeigt. Somit ist es nicht mehr erforderlich, dass an dem messenden Maschinenfuß eine vergleichsweise aufwendige und auch teure Anzeigeskala ausgebildet bzw. angebracht wird. Der messenden Maschinenfuß kann somit vergleichsweise kostengünstig hergestellt werden.

Gemäß einem weiteren Ausführungsbeispiel der Erfindung nach Anspruch 12 weist das Verfahren zusätzlich den folgenden Schritt auf: Fixieren des ersten Fußteils relativ zu dem zweiten Fußteil. Durch das genannte Fixieren beispielsweise mittels eines Klemmelements kann zwischen den beiden Fußteilen eine mechanisch starre Verbindung hergestellt werden. Diese Fixierung erfolgt bevorzugt nach dem Justieren des messenden Maschinenfußes, so dass sich die Bearbeitungsvorrichtung in einem optimalen, spannungsarmen und reproduzierten Aufstellzustand befindet.

Die relative Fixierung der beiden Fußteile zueinander in einer mechanisch starren Weise hat zudem den Vorteil, dass während des Betriebs der Bearbeitungsvorrichtung ein ungewolltes Federn oder Schwingen des Maschinenfußes verhindert wird. Die Bearbeitungsvorrichtung bleibt somit sicher und fest auf dem jeweiligen Untergrund aufgestellt.

Weitere Vorteile und Merkmale der vorliegenden Erfindung ergeben sich aus der folgenden beispielhaften Beschreibung derzeit bevorzugter Ausführungsformen. In der Zeichnung zeigen in schematischen Darstellungen:
- Figur 1: einen auf einer Stellfläche aufgestellten Bestückautomaten gemäß einem Ausführungsbeispiel der Erfindung,
- Figur 2: eine perspektivische Ansicht eines Maschinenfußes gemäß einem Ausführungsbeispiel der Erfindung,
- Figur 3a: eine erste Seitenansicht des in Figur 2 dargestellten Maschinenfußes,
- Figur 3b: eine zweite Seitenansicht des in Figur 2 dargestellten Maschinenfußes,
- Figur 3c: eine Querschnittdarstellung des in Figur 2 dargestellten Maschinenfußes,
- Figur 3d: eine Draufsicht des in Figur 2 dargestellten Maschinenfußes,
- Figur 4a: eine Seitenansicht eines auf einer Stellfläche aufgestellten Bestückautomaten, welcher drei starre Maschinenfüße und einen messenden Maschinenfuß aufweist,
- Figur 4b: eine schematische Darstellung des Chassis und der Maschinenfüße des in Figur 4a dargestellten Bestückautomaten in einer Draufsicht zur Illustration eines bevorzugten Verfahrens zum Aufstellen des Bestückautomaten, und
- Figur 5: eine schematische Darstellung eines aus dem Stand der Technik bekannten höhenverstellbaren Maschinenfußes.

An dieser Stelle bleibt anzumerken, dass sich in der Zeichnung die Bezugszeichen von gleichen oder von einander entsprechenden Komponenten lediglich in ihrer ersten Ziffer unterscheiden.

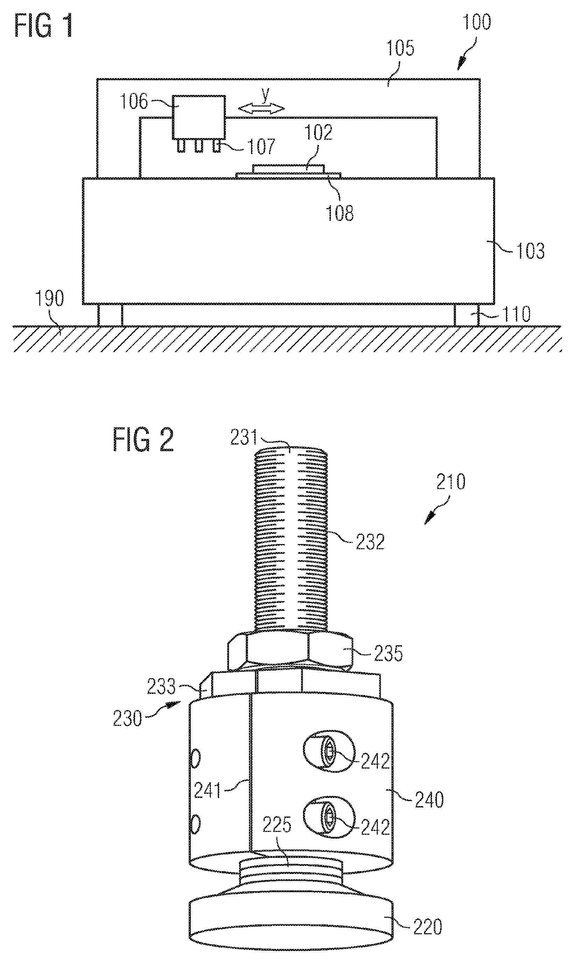

In Figur 1 ist ein Bestückautomat 100 zum Bestücken von Substraten 2 mit elektronischen Bauteilen dargestellt. Der Bestückautomat 100 umfasst ein Chassis 103, auf dessen Oberseite sich eine Transportstrecke 108 für zu bestückende Substrate bzw. Bauelementträger 102 befindet. Die auf der Transportstrecke 108 befindlichen Bauelementträger 102 werden mittels eines an einem Trägerarm 105 entlang einer y-Richtung verfahrbaren Bestückkopf 106 mit elektronischen Bauelementen bestückt.

Der Bestückkopf 106 weist mehrere Bauelement-Haltevorrichtungen 107 auf, die gemäß dem hier dargestellten Ausführungsbeispiel als Saugpipetten ausgebildet sind. Durch eine entsprechende pneumatische Beaufschlagung der Saugpipetten 107 werden die Bauelemente temporär aufgenommen. Die Bauelemente können somit von einer nicht dargestellten Bauelement-Zuführvorrichtung entnommen, transportiert und an einer durch entsprechende Bauelement-Anschlussflächen definierten Bestückposition auf das Substrat 102 aufgesetzt werden.

An einer Unterseite des Chassis 103 sind Maschinenfüße 110 befestigt, mittels welcher der Bestückautomat 100 auf einem Untergrund bzw. auf einer Stellfläche 190 positionierbar ist. Die Maschinenfüße 110 sind höhenverstellbar, um eine plane Ausrichtung und einen sicheren Stand des Bestückautomaten 100 auf dem Untergrund 190 zu ermöglichen. Durch die schnellen Bewegungen des Bestückkopfes 106 entstehen hohe dynamische Kräfte, welche über das Chassis 103 und die Maschinenfüße 110 so weit wie möglich auf den Untergrund 190 abgeleitet werden müssen. Eigenschwingungen des Bestückautomaten 100 können somit unterbunden werden.

Figur 2 zeigt eine perspektivische Ansicht eines Maschinenfußes 210, welcher ein erstes Fußteil 220 und ein zweites Fußteil 230 aufweist. Das erste Fußteil 220 ist an seiner Unterseite derart ausgebildet, dass der Maschinenfuß 210 sicher auf einer nicht dargestellten Stellfläche aufgestellt werden kann.

Das zweite Fußteil 230 weist an seiner Oberseite einen als Gewindestange ausgebildeten zylindrischen Schaft 231 auf, der mit einem Aufnahmegewinde 232 versehen ist. Mittels der Gewindestange 231 kann das zweite Fußteil 230 in eine dazu passende, ein Innengewinde aufweisende Aufnahmebohrung eines in Figur 2 nicht dargestellten Chassis eingeschraubt werden.

Um das Einschrauben des Maschinenfußes 210 zu erleichtern, ist an dem zweiten Fußteil 230 ein Anzugselement 233 ausgebildet. Gemäß dem hier dargestellten Ausführungsbeispiel ist das Anzugselement ein Außen-Sechskant 233. An dem Außen-Sechskant 233 kann ein gewöhnlicher Schraubenschlüssel angreifen, so dass die Gewindestange 231 auf einfache und Kraft sparende Weise in das Chassis eingeschraubt werden kann.

Der Maschinenfuß 210 weist ferner ein Fixierelement 235 auf, welches zum Fixieren der Gewindestange 231 relativ zu dem Chassis vorgesehen ist. Gemäß dem hier dargestellten Ausführungsbeispiel ist das Fixierelement eine Kontermutter 235, welche an dem Aufnahmegewinde 232 gegen das Chassis geschraubt werden kann. Somit kann durch eine entsprechende Klemmwirkung zwischen Kontermutter 235 und Aufnahmegewinde 232 bzw. zwischen Kontermutter 235 und Chassis eine versehentliche Verdrehung der Gewindestange 231 und damit eine ungewollte Höhen-Dejustierung verhindert werden.

Das zweite Fußteil 230 weist ferner eine Spannhülse 240 auf, in der ein Teil des ersten Fußteils 220 eingeführt ist. Die Spannhülse 240 weist einen Öffnungsschlitz 241 auf. In einer geöffneten Position der Spannhülse 240 ist das erste Fußteil 220 relativ zu dem zweiten Fußteil 230 verschiebbar. In einer geschlossenen Position der Spannhülse 240 sind die beiden Fußteile 220 und 230 relativ zueinander starr fixiert. Diese Fixierung wird gemäß dem hier dargestellten Ausführungsbeispiel der Erfindung durch ein Anziehen von zwei seitlich angebrachten Klemmelementen 242 erreicht. Die Klemmelemente sind gemäß dem hier dargestellten Ausführungsbeispiel herkömmliche Inbusschrauben 242.

Innerhalb der Spannhülse 240 befindet sich ein in Figur 2 nicht dargestelltes Federelement, welches abhängig von der auf den Maschinenfuß 210 wirkenden Aufsetzkraft mehr oder weniger stark komprimiert wird. Mittels einer Anzeigeskala 225 wird diese Kompression angezeigt. Somit kann von außen auf einfache Weise die auf den Maschinenfuß 210 wirkende Aufsetzkraft abgelesen werden. Somit stellen das Federelement und die Anzeigeskala 225 gemeinsam eine Aufsetzkraft-Messeinrichtung des Maschinenfußes 210 dar.

Durch ein Verdrehen der Gewindestange 231 wird die effektive Höhe des Maschinenfußes 210 verstellt. Unter Berücksichtigung der Lasten eines aufzustellenden Bestückautomaten, welche Lasten von weiteren Maschinenfüßen getragen werden, ändert sich automatisch die auf den Maschinenfuß 210 wirkende Aufsetzkraft. Damit ändert sich auch die Kompression des Federelements. Das Aufnahmegewinde 232 bzw. die Gewindestange 231 und der Außen-Sechskant 233 stellen somit eine Aufsetzkraft-Einstellvorrichtung dar.

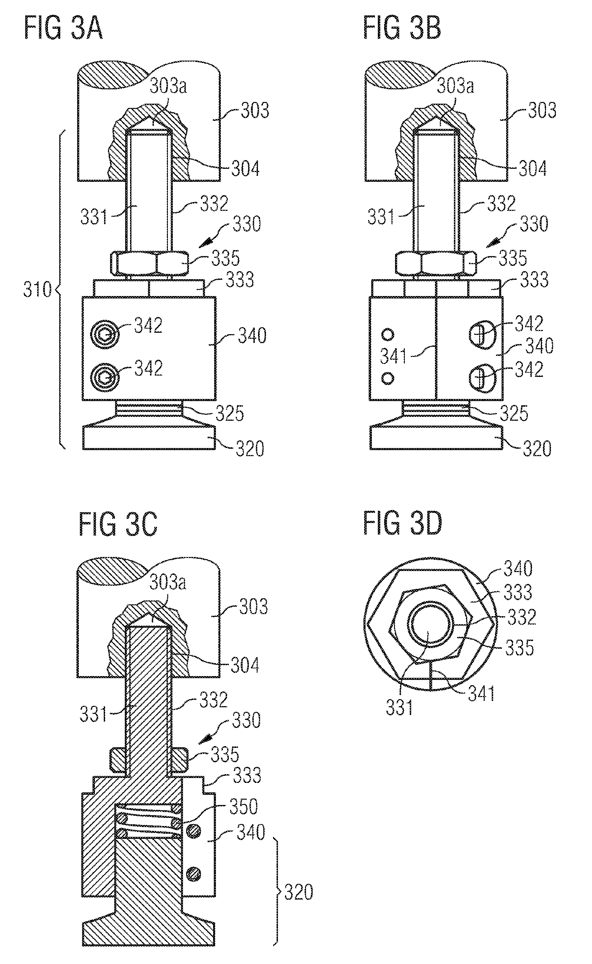

Die Figuren 3a, 3b, 3c und 3d stellen verschiedene Ansichten des in Figur 2 dargestellten Maschinenfußes 210 dar, welcher nunmehr mit dem Bezugszeichen 310 versehen ist. Dabei zeigt Figur 3a eine erste Seitenansicht, Figur 3b eine zweite Seitenansicht, Figur 3c eine Querschnittdarstellung und Figur 3d eine Draufsicht.

Wie aus den Figuren 3a bis 3c ersichtlich, ist der als Gewindestange ausgebildete zylindrische Schaft 331 in eine mit einem Innengewinde 304 versehene Bohrung 303a des Chassis 303 eingeschraubt. Die Gewindestange 331 ist einem zweiten Fußteil 330 des Maschinenfußes 310 zugeordnet. Eine Kontermutter 335, welche mit einem Aufnahmegewinde 332 der Gewindestange 331 zusammenwirkt, dient als Fixierelement, so dass die Gewindestange 331 relativ zu dem Chassis 303 fixiert werden kann.

An der Gewindestange 331 ist ferner ein als Außen-Sechskant ausgebildetes Anzugselement 333 angeformt, so dass die Gewindestange 331 auf Kraft sparende Weise mittels eines herkömmlichen Schraubenschlüssels gegenüber dem Chassis verdreht und so die Höhe des Maschinenfußes 310 variiert werden kann.

Das zweite Fußteil 330 weist ferner eine Spannhülse 340 auf. Die Spannhülse 340 ist mit einem Öffnungsschlitz 341 versehen, so dass der Innendurchmesser der Spannhülse 340 von der Aufweitung des Öffnungsschlitzes 341 abhängt. Mittels zweier als Inbusschrauben ausgebildeter Klemmelemente 342 kann der Innendurchmesser der Spannhülse 340 derart verringert werden, dass ein erstes Fußteil 320 in der Spannhülse 340 arretiert wird. In einer geöffneten Position der Spannhülse 340 ist das erste Fußteil 320 in der Spannhülse 340 verschiebbar.

Innerhalb der Spannhülse 340 befindet sich ein als Schraubenfeder ausgebildetes Federelement 350, welches abhängig von der auf den Maschinenfuß 310 wirkenden Aufsetzkraft mehr oder weniger stark komprimiert wird. Mittels der Anzeigeskala 325 wird diese Kompression angezeigt.

Figur 4a zeigt eine Seitenansicht eines Bestückautomaten 400, welcher auf einer Stellfläche 490 aufgestellt ist. Der Bestückautomat 400 weist insgesamt vier Maschinenfüße auf. Drei der vier Maschinenfüße sind herkömmliche höhenverstellbare starre Maschinenfüße. Einer der Maschinenfüße ist ein die Aufsetzkraft messender Maschinenfuß. In der dargestellten Seitenansicht ist lediglich ein starrer Maschinenfuß 411a und der messende Maschinenfuß 410 zu erkennen.

Figur 4b zeigt in einer Draufsicht eine schematische Darstellung des Chassis 403 des Bestückautomaten 400 und der an dem Chassis 403 angebrachten vier Maschinenfüße. Neben dem messenden Maschinenfuß 410 sind drei starre aber höhenverstellbare Maschinenfüße 411a, 411b und 411c dargestellt.

Im Folgenden wird ein besonders effektives Verfahren zum Aufstellen des Bestückautomaten 400 beschrieben, welches unabhängig von der Geschicklichkeit eines Monteurs eine gleichmäßige Lastverteilung aller Maschinenfüße 410, 411a, 411b und 411c gewährleistet.

In einem ersten Schritt werden die drei starren Maschinenfüße 411a, 411b, 411c derart höhenverstellt, dass (a) der messende Maschinenfuß 410 entlastet ist und dass (b) der Bestückautomat 400 horizontal ausgerichtet ist. Zum horizontalen Ausrichten kann beispielsweise eine herkömmliche Wasserwaage verwendet werden. Das Entlasten des messenden Maschinenfußes 410 hat zu Folge, dass die Gewichtskraft des Bestückautomaten 400 im wesentlichen auf die drei starren Maschinenfüße 411a, 411b, 411c verteilt ist. Um eine zuverlässige horizontale Ausrichtung und ein ungewolltes Verkippen um die durch die beiden Maschinenfüße 411a und 411b definierte Kippachse 415 zu vermeiden, kann der messende Maschinenfuß 410 derart eingestellt werden, dass er eine sehr geringe aber von Null verschiedene Last trägt.

In einem zweiten Schritt wird der messende Maschinenfußes 410 mittels eines definierten Herausdrehens der Gewindestange 331 aus der Gewindebohrung 303a (siehe Figuren 3a-3c) derart justiert, dass die Messeinrichtung des messenden Maschinenfußes 410 eine vorbestimmte Aufsetzkraft anzeigt. Die vorbestimmte Aufsetzkraft ergibt sich dabei aus der Gesamtmasse des Bestückautomaten 400 und einer gegebenenfalls ungleichmäßigen Masseverteilung des Bestückautomaten 400. Bei einer gleichmäßigen Masseverteilung des Bestückautomaten 400 liegt die vorbestimmte Aufsetzkraft genau dann vor, wenn jeder der Maschinenfüße 410, 411a, 411b und 411c genau ein Viertel der gesamten Gewichtskraft des Bestückautomaten 400 trägt.

Selbstverständlich kann die vorbestimmte Aufsetzkraft basierend auf der Gewichtskraft und der Masseverteilung des Bestückautomaten 400 vorab berechnet werden. Bei bekannter Aufsetzkraft des messenden Maschinenfußes 410 kann an dem Maschinenfuß 410 auch lediglich eine einzelne feste Einstellmarkierung verwendet werden, welche die vorab bestimmte Aufsetzkraft anzeigt. Eine vergleichsweise aufwendige und auch teure Anzeigeskala, die an dem Maschinenfuß ausgebildet bzw. angebracht ist, ist demzufolge nicht mehr zwingend erforderlich.

In einem dritten Schritt wird der messende Maschinenfuß derart fixiert, dass das erste Fußteil und das zweite Fußteil miteinander verklemmt werden. Gemäß dem hier beschriebenen Ausführungsbeispiel erfolgt dies durch ein Schließen der in den Figuren 3a und 3b dargestellten Spannhülse 340. Damit wird zwischen den beiden Fußteilen eine mechanisch starre Verbindung hergestellt. Der Bestückautomat 400 ist damit derart aufgestellt, dass infolge der gleichmäßigen Belastung der einzelnen Maschinenfüße 410, 411a, 411b, 411c keine mechanischen Spannungen auftreten und dass infolge der starren Fixierung der beiden Fußteile zueinander ein Federn bzw. ein Schwingen des Bestückautomaten 400 auch bei einem hochdynamischen Betrieb ausgeschlossen ist.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

### Bezugszeichenliste

- 100: Bestückautomat
- 102: Leiterplatte
- 103: Chassis
- 105: Trägerarm
- 106: Bestückkopf
- 107: Bauelement-Haltevorrichtungen / Saugpipette
- 108: Transportstrecke
- 110: Maschinenfuß
- 190: Stellfläche / Untergrund / Fundament

- 210: Maschinenfuß
- 220: erstes Fußteil
- 225: Anzeigeskala
- 230: zweites Fußteil
- 231: zylindrischer Schaft / Gewindestange
- 232: Aufnahmegewinde
- 233: Anzugselement / Außen-Sechskant
- 235: Fixierelement / Kontermutter
- 240: Spannhülse
- 241: Öffnungsschlitz
- 242: Klemmelement / Inbusschraube

- 303: Chassis
- 303a: Bohrung
- 304: Innengewinde
- 310: Maschinenfuß
- 320: erstes Fußteil
- 325: Anzeigeskala
- 330: zweites Fußteil
- 331: zylindrischer Schaft / Gewindestange
- 332: Aufnahmegewinde
- 333: Anzugselement / Außen-Sechskant
- 335: Fixierelement / Kontermutter
- 340: Spannhülse
- 341: Öffnungsschlitz
- 342: Klemmelement / Inbusschraube
- 350: Federelement / Schraubenfeder

- 400: Bestückautomat
- 403: Chassis
- 410: messender Maschinenfuß
- 411a: starrer Maschinenfuß
- 411b: starrer Maschinenfuß
- 411c: starrer Maschinenfuß
- 415: Kippachse
- 490: Stellfläche / Untergrund / Fundament

- 503: Chassis
- 503a: Gewindebohrung
- 504: Innengewinde
- 510: Maschinenfuß
- 535: Kontermutter
- 581: Grundkörper / Gewindestange

## Patentansprüche

1. Maschinenfuß für eine Bearbeitungsvorrichtung (100, 400), insbesondere für einen Bestückautomaten (100, 400) zum automatischen Bestücken von Bauelementeträgern (102) mit Bauelementen, der Maschinenfuß (110, 210, 310) aufweisend
• ein erstes Fußteil (220, 320), eingerichtet zum Abstützen an einem Untergrund (190, 490),
• ein zweites Fußteil (230, 330), welches mit einem Chassis (303) der Bearbeitungsvorrichtung (100, 400) koppelbar ist, und
• eine Messeinrichtung (350, 325), welche zwischen dem ersten Fußteil (220, 320) und dem zweiten Fußteil (230, 330) angeordnet ist und welche zum Messen und Anzeigen der zwischen dem ersten Fußteil (220, 320) und dem zweiten Fußteil (230, 330) wirkenden Aufsetzkraft eingerichtet ist.

2. Maschinenfuß nach Anspruch 1, zusätzlich aufweisend
• eine Aufsetzkraft-Einstelleinrichtung (232, 233, 332, 333), welche eingerichtet ist
- zum Höhenverstellen des zweiten Fußteils (230, 330) in Bezug zu dem Chassis (303) und/oder
- zum Höhenverstellen des ersten Fußteils in Bezug zu dem Untergrund.

3. Maschinenfuß nach Anspruch 2, bei dem die Aufsetzkraft-Einstelleinrichtung ein Aufnahmegewinde (232, 332) aufweist, welches
- an dem zweiten Fußteil (230, 330) ausgebildet ist und welches
- in das Chassis (303) der Bearbeitungsvorrichtung (100, 400) einschraubbar ist.

4. Maschinenfuß nach Anspruch 3, zusätzlich mit
• einem Fixierelement (235, 335), welches zum Fixieren des Aufnahmegewindes (232, 332) relativ zu dem Chassis (303) eingerichtet ist.

5. Maschinenfuß nach einem der Ansprüche 1 bis 4, bei dem die Messeinrichtung ein Federelement (350) aufweist.

6. Maschinenfuß nach Anspruch 5, bei dem
die Messeinrichtung zusätzlich eine Anzeigeskala (325) aufweist, mittels welcher eine Kompression des Federelements (350) ablesbar ist.

7. Maschinenfuß nach einem der Ansprüche 1 bis 6, zusätzlich aufweisend
• ein Klemmelement (242, 342), welches zum Fixieren des ersten Fußteils (220, 320) relativ zu dem zweiten Fußteil (230, 330) eingerichtet ist.

8. Maschinenfuß nach Anspruch 7, bei dem
- das zweite Fußteil (230, 330) eine Spannhülse (240, 340) aufweist, innerhalb der zumindest ein Teil des ersten Fußteils (220, 320) geführt ist oder bei dem
- das erste Fußteil eine Spannhülse aufweist, innerhalb der zumindest ein Teil des zweiten Fußteils geführt ist

9. Bearbeitungsvorrichtung, insbesondere Bestückautomat (100, 400) zum Bestücken von Bauelementeträgern (102) mit Bauelementen, die Bearbeitungsvorrichtung (100, 400) aufweisend ein
• Chassis (303) und
• zumindest einen Maschinenfuß (210, 310) nach einem der Ansprüche 1 bis 8.

10. Verfahren zum Aufstellen einer Bearbeitungsvorrichtung, insbesondere eines Bestückautomaten (100, 400) zum automatischen Bestücken von Bauelementeträgern (102) mit Bauelementen, welche Bearbeitungsvorrichtung (100, 400) vier Maschinenfüße aufweist, wobei
drei der vier Maschinenfüße starre Maschinenfüße (411a, 411b, 411c) sind, die in der Höhe verstellbar sind, und einer der vier Maschinenfüße ein messender Maschinenfuß (210, 310) nach einem der Ansprüche 1 bis 8 ist,
das Verfahren aufweisend folgende Schritte
• Höhenverstellen der drei starren Maschinenfüße (411a, 411b, 411c) derart, dass
der messende Maschinenfuß (210, 310) zumindest teilweise entlastet ist und dass
die Bearbeitungsvorrichtung (100, 400) horizontal ausgerichtet ist, und
• Justieren des messenden Maschinenfußes (210, 310), so dass von der Messeinrichtung (350, 325) des messenden Maschinenfußes (210, 310) eine vorbestimmte Aufsetzkraft gemessen und angezeigt wird.

11. Verfahren nach Anspruch 10, zusätzlich aufweisend den Schritt
• Berechnen der vorbestimmten Aufsetzkraft basierend auf der Gewichtskraft und der Masseverteilung der Bearbeitungsvorrichtung (100, 400).

12. Verfahren nach einem der Ansprüche 10 bis 11, zusätzlich aufweisend den Schritt
• Fixieren des ersten Fußteils (220, 320) relativ zu dem zweiten Fußteil (230, 330).
